(19) Europäisches Patentamt / European Patent Office / Office européen des brevets

(11) **EP 2 716 465 A1**

(12) **EUROPEAN PATENT APPLICATION**
published in accordance with Art. 153(4) EPC

(43) Date of publication:
**09.04.2014 Bulletin 2014/15**

(51) Int Cl.:
**B41M 5/00** *(2006.01)*     **B32B 9/00** *(2006.01)*
**B32B 13/04** *(2006.01)*     **B41M 5/50** *(2006.01)*
**B41M 5/52** *(2006.01)*     **D04H 1/544** *(2012.01)*
**D04H 1/55** *(2012.01)*

(21) Application number: **12792339.9**

(22) Date of filing: **31.05.2012**

(86) International application number:
**PCT/JP2012/064092**

(87) International publication number:
**WO 2012/165554 (06.12.2012 Gazette 2012/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2011 JP 2011122038**

(71) Applicant: **Tokuyama Corporation**
**Shunan-shi, Yamaguchi-ken 745-8648 (JP)**

(72) Inventors:
• **FUJIMOTO, Tadashi**
  **Shunan-shi**
  **Yamaguchi 745-8648 (JP)**
• **HIRAYAMA, Koki**
  **Shunan-shi**
  **Yamaguchi 745-8648 (JP)**

(74) Representative: **Jackson, Martin Peter**
**J A Kemp**
**14 South Square**
**Gray's Inn**
**London WC1R 5JJ (GB)**

(54) **PRINTING SHEET AND RELEASE SHEET USED FOR FORMING PRINTING SURFACE ON PRINTING SHEET**

(57)     A printing sheet 1 comprising a base sheet 5 and an inorganic solidified matter layer 3 laminated on the surface of the base sheet 1, the surface 3a of the inorganic solidified matter layer 3 serving as the printing surface, wherein, in an electron microphotograph magnified by 100 times, the printing surface is a surface on where continuous flat surfaces and indefinite protuberances surrounded by said flat surfaces are present being mixed together, the protuberances being present at a ratio of 10 to 30% per a unit area and being observed having sizes or long diameters of 10 to 300 $\mu$m and in a number of 50 to 300 per 1 mm$^2$. With this printing sheet, the fiber is effectively prevented from adhering on the surface of the inorganic solidified matter layer on which the printing is to be executed, and images can be finely printed maintaining in good quality without being blurred.

Fig. 1

**Description**

Technical Field:

This invention relates to a printing sheet that has an inorganic solidified matter layer and is adapted to being printed on the surface of the inorganic solidified matter layer. The invention, further, relates to a mold sheet used for rendering the surface of the inorganic solidified matter layer of the printing sheet to be used as a printing surface having excellent printability.

Background Art:

A widespread use of personal computers and digital cameras in general households is accompanied by also a widespread use of ink-jet printers that are capable of printing vivid images in full colors aided by their low prices. However, qualities of the ordinary fine papers and coated papers are not enough for meeting the requirements of the recording papers for printing used for the ink-jet printers. The printing papers now must satisfy such requirements as quickly absorbing the ink deposited on the paper surfaces, forming vivid images by suppressing ink droplets from spreading or blurring on the paper surfaces, and offering excellent color fastness of the formed images without fading color over extended periods of time.

In order to impart such properties to the printing surfaces (paper surfaces), proposals have been made to form a layer of an inorganic solid matter on the surface of the paper by applying a variety of kinds of inorganic solid matters thereon together with a binding agent. For instance, the present applicant has proposed in a patent document 1 a printing sheet which comprises a base sheet and a printing layer (inorganic solidified matter layer) that is formed on the surface of the base sheet and contains a plaster in a half-solidified state.

When the surface of the printing layer of the printing sheet proposed in the patent document 1 is printed by using, for example, an ink-jet printer, the plaster undergoes the carbonatation after the printing and is completely solidified to turn into the calcium carbonate. Therefore, the printed image is firmly held on the printing surface. Besides, the printed image has rugged appearance not only forming fast images with deep pictorial quality but also enabling ink components forming images to be protected from ultraviolet rays or ozone. Namely, the printing sheet is very excellent from the standpoint of preserving the printed images for extended periods of time, too.

Prior Art Document:

Patent Document:

Patent document 1: WO2008/013294

Outline of the Invention:

Problems that the Invention is to Solve:

The above printing sheet has a protection sheet that is strippably provided on the surface of the printing layer. Namely, the strippable protection sheet for protecting the surfaces is provided so that the inorganic solidified matter layers of the printing layers containing a half-solidified plaster will not be damaged by the rubbing between the sheets or by the external force. At the time of printing, the protection sheet is stripped off.

Here, the protection sheet has a function for protecting the inorganic solidified matter layer in the stage of before being printed and, at the same time, a function as a mold sheet for forming the printing surface on the inorganic solidified matter layer. That is, the solidified inorganic matter such as plaster that forms the inorganic solidified matter layer is maintained in a state of before being completely solidified and, after the printing, is completely solidified upon, for example, absorbing carbonic acid gas. In the state where the protection sheet is provided, therefore, the surface of the inorganic solidified matter layer is in a half-solidified state. Therefore, when the protection sheet that is closely adhered onto the surface of the inorganic solidified matter layer is stripped off at the time of printing, the surface of the protection sheet is transferred onto the surface of the inorganic solidified matter layer on which the printing will be executed.

As will be understood from the above, the surface of the protection sheet (surface that closely adheres to the surface of the inorganic solidified matter layer) is transferred and is reflected on the surface of the inorganic solidified matter layer. Therefore, the protection sheet had preferably been a fiber sheet such as of a woven fabric or a nonwoven fabric. That is, when a resin film is used as the protection sheet, the surface of the inorganic solid matter becomes little rugged. Therefore, an image printed on the surface does not produce so much stereoscopic feeling or the feeling of depth. When a fibrous protection sheet is used, however, the surface of the inorganic solidified matter layer is formed rugged due to the fiber, and the printed image is imparted with stereoscopic feeling or the feeling of depth due to the ruggedness.

When the fibrous sheet is used as the protection sheet, however, there arouses a problem in that the fiber partly remains adhered on the surface of the inorganic solidified matter layer of the printing sheet depending on the kind of the fiber sheet after the fiber sheet is stripped off. There, further, arouses a problem in that the printed image is blurred and becomes obscure. Theses problems develop conspicuously particularly when the nonwoven fabric sheet is used as the protection sheet.

It is, therefore, an object of the present invention to provide a printing sheet which has an inorganic solidified matter layer as the printing layer and has, formed thereon, a printing surface for obtaining vividly printed images, effectively preventing the fiber from remaining on the surface of the inorganic solidified matter layer on which the printing is to be executed and effectively preventing the printed images from blurring.

Another object of the present invention is to provide a mold sheet that works as a mold for forming the above-mentioned printing surface on the surface of the inorganic solidified matter layer of the printing sheet.

Means for Solving the Problems:

The present inventors have conducted experiments extensively concerning the effects of the surface condition of the inorganic solidified matter layer formed on the printing sheet upon the quality of the printed image. As a result, the inventors have discovered that when the sheet (mold sheet) closely adhered on the surface is made from a heat-melt adhering core-sheath fiber and is press-adhesion treated by using a roll under predetermined conditions, no fiber remains adhered after the sheet is stripped from the surface of the inorganic solidified matter layer and, besides, the printed images are effectively prevented from blurring, making it possible to obtain vivid images.

Namely, according to the present invention, there is provided a printing sheet comprising a base sheet and an inorganic solidified matter layer laminated on the surface of the base sheet, the surface of the inorganic solidified matter layer serving as the printing surface, wherein in an electron microphotograph magnified by 100 times, the printing surface is a surface on where continuous flat surfaces and indefinite protuberances surrounded by the flat surfaces are present being mixed together, the protuberances being present at a ratio of 10 to 30% per a unit area and being observed having sizes or long diameters of 10 to 300 $\mu$m and in a number of 50 to 300 per 1 mm$^2$.

In the printing sheet, it is most desired that the inorganic solidified matter layer is a layer containing at least a plaster in a half-solidified state.

The printing surface is formed by closely adhering a mold sheet having a transfer surface onto the surface of the inorganic solidified matter layer, and stripping the mold sheet therefrom.

According to the invention, further, there is provided a mold sheet having a transfer surface, wherein the transfer surface is closely adhered onto the surface of an inorganic solidified matter layer and is stripped therefrom so that the transfer surface is transferred onto the surface of the inorganic solidified matter layer to form the printing surface, and wherein,

In an electron microphotograph magnified by 100 times, the transfer surface includes continuous flat surfaces and indefinite dents surrounded by the flat surfaces that are present being mixed together, the flat surfaces being present at a ratio of 70 to 90% per a unit area, and the dents being observed having sizes or long diameters of 10 to 300 $\mu$m and in a number of 45 to 250 per 1 mm$^2$.

It is desired that the mold sheet is made from a nonwoven fabric sheet of a core-sheath fiber with polypropylene or polyester as a core material and polyethylene as a sheath material, and that the nonwoven fabric sheet has been press-adhesion treated by using a heating roll.

The above printing sheet and the mold sheet are transported and preserved in the form of a printing laminate with the mold sheet being so provided that the transfer surface thereof is closely adhered to the inorganic solidified matter layer of the printing sheet. At the time of use, the mold sheet is stripped off, and the printing is executed onto the surface of the inorganic solidified matter layer of the printing sheet.

Effects of the Invention:

The printing sheet of the present invention has the printing surface on the surface of the inorganic solidified matter layer laminated on the surface of the base sheet, and the printing is executed on the printing surface. If an electron microphotograph magnified by 100 times is observed, the printing surface is a surface on where continuous flat surfaces and indefinite protuberances surrounded by the flat surfaces are present being mixed together. Namely, indefinite protuberances are present on the flat surfaces at a ratio of 10 to 30% per a unit area, and are observed having sizes or long diameters of 10 to 300 $\mu$m and in a number of 50 to 300 per 1 mm$^2$. As will be understood from the ratio and number of the protuberances, the printing sheet of the present invention has many indefinite and fine protuberances on the flat surfaces, and the printing ink deposited on the flat surfaces and on the protuberances infiltrates into the interior thereof preventing the printed images from blurring. Prevention of the blurring makes it possible to print images that are vivid even into details. Specifically, from the results of extensive experiments, the present inventors consider that the protuberances present on the surfaces at a given surface ratio work effectively to prevent the printed images from blurring.

Besides, since the dents and the flat surfaces are present being mixed together in a random fashion, it is allowed to print images having natural appearance such as stereoscopic feeling and feeling of depth that could not be obtained with the conventional digital photographs.

For instance, if the protuberances are not of indefinite shapes but are of definite shapes such as round or square shape and are, further, arranged regularly, then the natural appearance will be lost and mechanically synthesized impression will be produced. Further, if the number of indefinite protuberances of the above-mentioned sizes is either smaller or larger than the above-mentioned range, the printed images tend to be blurred and, therefore, to be obscured.

Further, the surface of the inorganic solidified matter layer which is the printing surface of the printing sheet is formed by closely adhering a mold sheet (also called protection sheet) onto the surface thereof, and stripping it off. Here, by using a nonwoven fabric sheet that is press-adhesion treated by using a heating roll as the mold sheet, it is allowed to form a number of indefinite protuberances maintaining balance as described above. As a result, the printing sheet of the invention effectively prevents the occurrence of such an inconvenience that the fiber remains adhered, and is free from a decrease in the quality of images caused by the residual fiber. This is because the fibers have been melt-adhered together by the heated press-adhesion treatment. Moreover, the fiber adhered on the printing surface causes a blur in the printed images. According to the present invention, however, the fiber is prevented from adhering making it possible to more reliably prevent a blur in the printed images.

In the invention, further, when an electron microphotograph magnified by 100 times is observed, continuous flat surfaces and indefinite dents surrounded by the flat surfaces are formed mixed together in the transfer surface (i.e., in the surface that is to be closely adhered onto the surface of the inorganic solidified matter layer) of the mold sheet that forms the above-mentioned printing surface on the surface of the inorganic solidified matter layer. The dents are present at a ratio of 10 to 30% per a unit area, and are observed having sizes or long diameters of 10 to 300 $\mu$m and in a number of 45 to 250 per 1 mm$^2$. Namely, the indefinite dents in the transfer surface correspond to the indefinite protuberances on the printing surface of the printing sheet, and the flat portions on the transfer surface correspond to the flat portions on the printing surface. When the transfer surface is closely adhered onto the surface of the inorganic solidified matter layer of the printing sheet, the inorganic solid matter that has not been completely solidified infiltrates into the indefinite dents. On the flat portions, however, the inorganic solid matter is blocked from infiltrating. As a result, when the transfer surface (mold sheet) is stripped off, the portions that have infiltrated into the indefinite dents are broken and are observed as indefinite protuberances. Here, the number of the indefinite dents (in a range of 45 to 250) in the transfer sheet is becoming slightly smaller than the number of the protuberances (in a range of 50 to 300) on the printing surface due to the fact that when the transfer surface is stripped off, a portion infiltrating into a large dent is broken splitting into plural segments to form a plurality of protuberances.

Further, since the protuberances are formed on the printing surface due to the breakage of the inorganic solid matter that has infiltrated into the transfer surface as described above, it is considered that the protuberances are working to prevent the printed images from blurring. Namely, the protuberances are assuming considerably rough surfaces due to the breakage, and it is considered that the ink that has deposited on these portions infiltrate quickly into the printing layer effectively suppressing the ink from spreading in the planar directions.

In the invention, the ratios of flat surfaces and indefinite protuberances present on the printing surface, and the number of the protuberances of predetermined sizes, can be calculated by processing the images of the electron microphotograph of the above-mentioned magnification relying on the binary processing of contrast of the images and, further, by conducting the same image processing of the images. The same holds for the flat surfaces and indefinite dents of the mold sheet, too.

In the invention, further, the mold sheet having the above transfer surface is obtained by press-adhesion treating, by using the heating roll, the nonwoven fabric sheet that is formed by using a heat-melt-adhering core-sheath fiber. That is, the sheath portions are melted by the press-adhesion treatment by using the heating roll without, however, melting the core portions so that the fibers are melt-adhered together and are, at the same time, flattened yet leaving the form of the fiber. This makes it possible to form the above-mentioned flat portions and indefinite dents (i.e., gaps in the fiber) and to form, on the surface of the inorganic solidified matter layer, the protuberances corresponding to the dents.

When, for example, a nonwoven fabric sheet that has not been press-adhesion-treated by the heating roll is used as the mold sheet, the fiber remains adhered when the sheet is stripped from the surface of the inorganic solidified matter layer. More than that, the flat portions and the indefinite protuberances cannot be formed on the printing surface maintaining good balance.

That is, the press-adhesion treatment by using the heating roll is to prevent the fiber from remaining adhered on the printing surface and, at the same time, to form flat portions on the printing surface. Namely, forming the flat portions helps prevent the fiber from remaining adhered and, therefore, prevents the printed images from blurring. As described above, on the other hand, forming the protuberances on the printing surface, too, prevents the printed images from blurring. However, the area ratio of the protuberances decreases with an increase in the formation of the flat surfaces. To reliably and stably prevent the printed images from blurring, therefore, it is necessary that the flat portions and the protuberances are formed maintaining a certain degree of balance on the printing surface by stripping the mold sheet. Use of the nonwoven fabric sheet causes irregularity in the formation of flat portions and protuberances resulting in the occurrence of portions where flat portions only or protuberances only are locally formed losing the effect for preventing the printed images from blurring and, therefore, lending the mold sheet not suited for forming printed images of good quality (fine images).

Further, when the nonwoven fabric sheet comprising an ordinary fiber is used by heat-treating it instead of using the core-sheath fiber, it becomes very difficult to control the degree of heat treatment, the fiber on the surface of the nonwoven fabric sheet is melt-adhered as a whole, rugged feeling specific to the fiber is lost, and there is attained no advantage of the printing sheet that uses the surface of the inorganic solidified matter layer as the printing layer like when the film having a flat surface is used as the mold sheet.

Further, when the woven fabric sheet is used as the mold sheet instead of using the nonwoven fabric sheet and is stripped from the surface of the inorganic solidified matter layer, the fiber remains adhered not so much as that of when the nonwoven fabric sheet is used. In this case, however, indefinite dents in which the inorganic solid matter infiltrates have not been formed to a sufficient degree. Therefore, it becomes difficult to suppress the ink from spreading and to form protuberances, which are effective against the blurring of the printed images, to a sufficient degree. Accordingly, the effect for preventing the printed image from blurring loses stability, and the mold sheet becomes not suited for vividly forming the printed images. Besides, dents formed in the woven fabric sheet are, in many cases, definite and are regularly arranged and, therefore, flat portions are formed on the printing surface being regularly arranged along the fiber and, therefore, impairing the appearance of the printed images.

Like those of the prior art, the printing sheet of the present invention is very useful as a recording material for ink-jet printers. Upon being printed on the printing sheet of the present invention, photographic images taken by using, for example, a digital camera, too, turn out to be of a pictorial quality preventing the printed images from being deteriorated.

Brief Description of the Drawings:

[Fig. 1] is a view illustrating the structure of a printing sheet of the invention in cross section together with a mold sheet.
[Fig. 2] is an electron microphotograph (magnified by 100 times) of the transfer surface of the mold sheet shown in Fig. 1.
[Fig. 3] is an electron microphotograph (magnified by 100 times) of the surface (printing surface) of the inorganic solidified matter layer of the printing sheet shown in Fig. 1.
[Fig. 4] is a schematic diagram showing, on an enlarged scale, the surface portion of the inorganic solidified matter layer shown in Fig. 3.

Mode for Carrying Out the Invention:

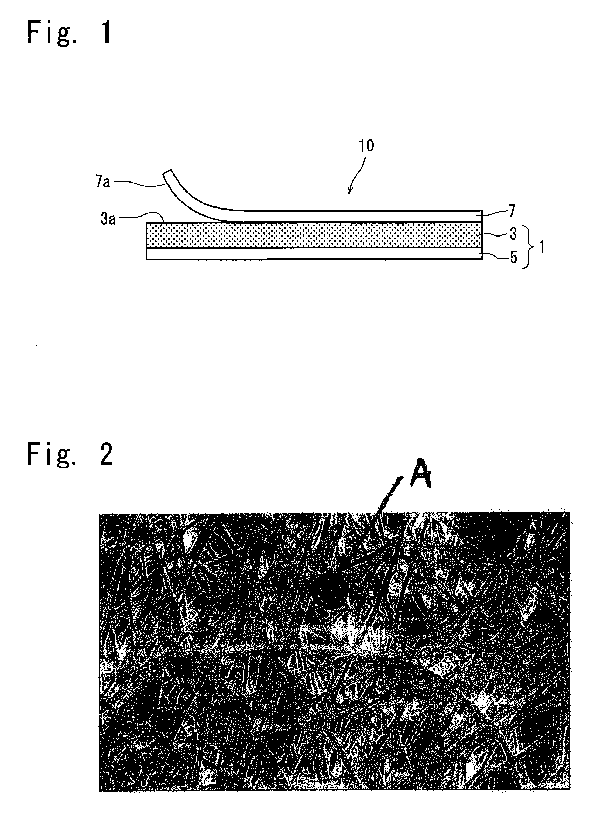

Referring to Fig. 1, a printing sheet 1 of the invention has a structure in which an inorganic solidified matter layer 3 is laminated on a base sheet 5, and a strippable mold sheet

7 that also works as a protection sheet is provided being closely adhered on the surface of the inorganic solidified matter layer 3. Namely, as shown in Fig. 1, the printing sheet 1 is preserved in the form of a printing laminate 10 comprising the mold sheet 7 provided on the inorganic solidified matter layer 3. At the time of use, the mold sheet 7 is stripped from the surface of the inorganic solidified matter layer 3, and the printing is executed on the surface 3a (i.e., on the printing surface) of the inorganic solidified matter layer 3 that is exposed.

In the printing sheet 1, the inorganic solidified matter layer 3 is held in a state of before being completely solidified. Namely, the printing is executed in this state and after the printing, the inorganic solidified matter layer is completely solidified. The inorganic solidified matter layer comprises, for example, gypsum that undergoes the solidification with water in the air. Here, it is most desired that a layer containing plaster in a half-solidified state is used as the inorganic solidified matter layer from the standpoint of increasing abrasion resistance and resistance of the printed images against ultraviolet rays, and of printing fast and stable images.

Described below is a case of when the layer containing the plaster in the half-solidified state is used as the inorganic solidified matter layer 3.

The above inorganic solidified matter layer 3 is formed by coating a kneaded product of a powder of slaked lime (calcium hydroxide) and water onto the hydrophilic surface of the base sheet 5, and removing water from the formed layer of the kneaded product by drying. In the step of drying, the slaked lime (calcium hydroxide) partly reacts with the carbonic acid gas in the air, and the layer turns into a plaster precursor (mixture of slaked lime and calcium carbonate) of the half-solidified state. If further left to stand in the air, the slaked lime remaining in the plaster precursor of the half-solidified state reacts with the carbonic acid gas in the air to form the calcium carbonate. Therefore, the solidification, further, proceeds to form the plaster. Namely, on the surface of the base sheet 5, there is formed, as the inorganic solidified matter layer 3, the layer that contains the plaster precursor of the half-solidified state in which the calcium carbonate is present as the slaked lime is partly carbonated.

The inorganic solidified matter layer 3 may be the one that contains the plaster precursor of the half-solidified state in which the calcium hydroxide (slaked lime) has not been completely carbonated and has not been completely solidified and is, preferably, the one in which the plaster precursor contains the calcium hydroxide in an amount of at least 10% by weight and, preferably, not less than 15% by weight. If the content of the calcium hydroxide is smaller than the above range, fastness of the image decreases and colors tend to fade out. Further, when the printing is executed by applying the printing ink on the surface of the inorganic solidified matter layer 3, the calcium hydroxide elutes out less in the printing ink and migrates less in the surface bringing about such inconvenience as decreased effect for protecting the printed images and decreased effect for suppressing the deterioration of the printed images caused by ultraviolet rays and the like.

To achieve the above object, the amount of the calcium hydroxide in the inorganic solidified matter layer 3 is better large. However, if the amount thereof is too large, the inorganic solidified matter layer fails to assume a sufficient degree of hardness, and the inorganic solidified matter layer 3 tends to be broken during the step of printing. It is, therefore, desired that the amount of the calcium hydroxide in the inorganic solidified matter layer 3 is not more than 90% by weight and, preferably, not more than 80% by weight.

The amount of the calcium hydroxide in the inorganic solidified matter layer 3 can be confirmed relying on the differential calorimetry.

The content of the calcium hydroxide in the inorganic solidified matter layer 3 can be adjusted by adjusting the ratio of carbonatation of the calcium hydroxide used for the layer formation (ratio of weight of the calcium carbonate that is formed to the weight of the slaked lime used for preparing the slurry), and by adjusting the ratio of additives such as binder, inorganic fine aggregate, liquid-absorbing inorganic powder and the like that will be described later.

When the method of adjusting the ratio of carbonatation of the calcium hydroxide is to be employed among the above adjusting methods, it is desired that the upper limit of the ratio of carbonatation is 80% and, specifically, 40%. Namely, if the carbonatation takes place to an excess degree, the surface of the inorganic solidified matter layer 3 becomes dense, and the printing ink permeates less.

Upon leaving the inorganic solidified matter layer 3 to stand in the atmosphere after images have been printed thereon, the plaster precursor in the layer is carbonated and finally turns into the plaster. Here, to improve toughness of the inorganic solidified matter layer 3, it is desired that the layer contains a solid component emulsion of a polymer as a binder. The emulsion of the polymer is an aqueous medium in which a monomer, an oligomer or a polymer thereof is dispersed, and its examples may include emulsions of acrylic resin, styrene-acrylic resin, vinyl acetate resin, polyurethane and polymer such as styrene/butadiene rubber. In the step of drying, the medium (water) evaporates from the emulsion, and the polymer component of the emulsion remains in the inorganic solidified matter layer 3. However, if the solid component of emulsion (i.e., polymer) remains in too large amounts, the printed image (printing ink) infiltrates less into the inorganic solidified matter layer 3. In order to maintain the toughness of the inorganic solidified matter layer 3 high and to maintain permeability of the ink, therefore, it is desired that the solid component of the polymer emulsion in the layer 3 is, usually, in a range of 3 to 50% by weight.

In addition to the above emulsion, the inorganic solidified matter layer 3 may, further, be blended with various additives for adjusting properties, such as various fiber materials, inorganic aggregates and liquid-absorbing inorganic powder. These additives are to improve properties such as strength of the inorganic solidified matter layer 3 that serves as the printing layer.

As the fiber materials, there can be exemplified glass fiber, vinylon fiber, polypropylene fiber, polyester fiber, polyethylene terephthalate fiber, acrylic fiber, aramide fiber, carbon fiber and metal fiber. Further, the fiber may be in the form of staple fiber, filaments, woven fabric or nonwoven fabric. Among them, the staple fiber is particularly effective in improving the toughness and cut workability of the inorganic solidified matter layer 3. Though there is no specific limitation on the length and diameter, it is desired that the staple fiber has a length of 1 mm to 10 mm and, specifically, 2 mm to 6 mm, and a diameter of 5 to 50 $\mu$m and, specifically, 10 to 30 $\mu$m from the standpoint of further improving the toughness of the inorganic solidified matter layer 3 and, depending on the cases, to attain excellent cut workability, too.

The inorganic fine aggregate is an inorganic particulate matter having an average grain size in a range of about 0.01 to 2 mm, and can be the one having an average grain size within the above range and not larger than one-fourth the thickness of the printing layer 3, such as, concretely, silica sand, lime sand, mica, glazing silica sand, glazing mica, ceramic sand, glass beads, perlite or calcium carbonate.

It is, further, desired that the inorganic solidified matter layer 3 is blended with a liquid-absorbing inorganic powder to avoid a decrease in the affinity to the hydrophilic ink caused by blending the inorganic solidified matter layer 3 with the polymer emulsion and to supplement the liquid-absorbing property that decreases as the calcium hydroxide is carbonated. The liquid-absorbing inorganic powder is a fine inorganic powder which is porous and absorbs oil in an amount of 100 ml/100 g or more, such as alumina powder or zeolite powder having an average grain size ($D_{50}$), calculated as volume, of not larger than 0.1 $\mu$m as measured relying, for example, on the laser diffraction/light scattering method.

That is, the above polymer emulsion is effective in improving the toughness and in increasing the junction strength between the base sheet 5 and the inorganic solidified matter layer 3 but also often brings about inconvenience such as decreasing the hydrophilic property of the inorganic solidified matter layer 3, repelling the ink when the printing is executed by using, for example, a hydrophilic ink, and causing the printed images to be blurred. However, use of the liquid-absorbing inorganic powder improves property for absorbing the printing ink and makes it possible to effectively prevent the above inconvenience. Specifically, it is desired that the liquid-absorbing inorganic powder is contained in an amount of about 0.5 to 10% by weight in the inorganic solidified matter layer 3 that contains the plaster.

Depending on the object, further, the inorganic solidified matter layer 3 can be blended with one or two or more kinds of known additives in combination in addition to the above components. Here, in any case, the additives should be added in amounts by which they do not impair the printing ink from infiltrating into the inorganic solidified matter layer 3 or from being fixed therein. For instance, it is desired that the additives are added in a range in which the content of the calcium carbonate formed by the carbonatation of the slaked lime (i.e. , the content of the calcium carbonate of when the ratio of carbonatation is 100%) is not less than 50% by weight.

The thickness of the inorganic solidified matter layer 3 is set to lie in a suitable range in which the printing can be executed and, usually, in a range of 0.05 to 0.3 mm and, specifically, 0.1 to 0.25 mm. If the thickness is too small, the image fixing property of when the image is printed decreases due to the permeation of the printing ink or the depth of image expressed by ruggedness is lost. On the other hand, a too large thickness causes disadvantage in economy or causes the formation of folded lines when folded imposing limitation on the printers that can be used for printing.

The base sheet 5 supporting the inorganic solidified matter layer 3 can be made from any material without special limitation provided it is capable of forming the inorganic solidified matter layer 3 by applying a slurry containing the plaster precursor onto the surface thereof.

Suitable examples thereof include a timber pulp paper or various resin sheets or resin films such as of vinyl resin like polyvinyl alcohol and polyvinyl acetate, acrylic resin like poly(meth)acrylate, polyolefin resin like polyethylene or polypropylene, or polyester resin like polyethylene terephthalate. Further, the base sheet may be a woven fabric or a nonwoven fabric comprising a fibrous material such as glass fiber, vinylon fiber, polypropylene fiber, polyester fiber, polyethylene terephthalate fiber, acrylic fiber, aramide fiber or carbon fiber, or may be a laminated film or sheet thereof.

The preferred base sheet 5 has flexibility and a suitable degree of stiffness. The base sheet 5 having such properties does not easily form folded lines despite it is folded, and is capable of effectively suppressing such inconvenience that cracks are formed in the inorganic solidified matter layer 3 formed on the base sheet 5. Though considerable limitation is imposed on the material of the base sheet 5, a pulp paper is, usually, preferably used. The pulp paper is a paper that is widely available, has flexibility and flexural strength, and can be closely adhered to the inorganic solidified matter layer 3. In addition to the pulp paper, it is also allowable to use a synthetic paper obtained by mixing the pulp paper with, as the binder fiber, a chemical fiber such as glass fiber, polyvinyl acetate fiber, polyester fiber or vinylon fiber.

The surface of the base sheet 5 may be treated with corona discharge to improve hydrophilic property. This enables the junction strength to be improved between the inorganic solidified matter layer 3 and the base sheet 5. Depending upon the use, further, the thickness of the base sheet 5 is set to lie in a suitable range, and is, usually, 0.02 to 0.5 mm. When the printing sheet is to be used, for example, as a recording material for printers, the thickness of the base sheet 5 is so set that the printing sheet can easily pass through the printer.

The printing sheet 1 of the invention is produced by applying an inorganic slurry for forming the inorganic solidified matter layer 3, such as a slurry for forming the plaster, onto one surface of the base sheet 5, sticking the mold sheet 7 thereon, and effecting the drying to a suitable degree to form the inorganic solidified matter layer 3.

Here, the slurry for forming the plaster is obtained by blending a kneaded product of slaked lime powder and water with the above-mentioned binder and various additives.

It is desired that the slaked lime powder used for the preparation of the slurry comprises fine particles of grain sizes of, for example, not larger than 5 $\mu$m in an amount of 20 to 80% by weight and coarse particles of grain sizes of 10 to 50 $\mu$m in an amount of 10 to 40% by weight. The fine particulate component imparts shape retentiveness and strength to the inorganic solidified matter layer 3 while the coarse particulate component is useful for enhancing permeability of the printing ink. Use of the slaked lime powder containing the fine particulate component and the coarse particulate component at the above ratio of amounts, is very desirable in forming the plaster layer having good strength and durability without impairing permeability for the printing ink. For instance, when the slaked lime powder comprising the fine particulate component only is used, permeability for the ink decreases and it may become difficult to obtain vividly printed images.

It is, further, desired that the slurry is suitably blended with a surfactant for homogeneously dispersing the blending agents and with a viscosity-imparting agent to assume a suitable degree of viscosity so that the kneaded product will not drip down at the time of being applied. The slurry can be applied by using a bar coater, a roll coater, a flow coater, a knife coater, a comma coater or by spraying, dipping, ejection or by transferring the molding material. As required, there can be used a trowel holder, a mouth piece drawer, a roller for pressing, or a monoaxial press.

The slurry is so applied that the thickness thereof after drying becomes the thickness of the inorganic solidified matter layer 3. Further, the slurry after applied may be dried to such a degree that the water content is not more than 5% in the inorganic solidified matter layer 3 that contains the plaster. If the water content is too high, it becomes difficult to maintain the shape of the layer. Or if the printing is executed in a state where the water content is high, the ink tends to be easily blurred. The drying is effected by heating the slurry-applied layer at about 40 to 150°C by blowing the hot air. Here, attention should be given to that if the heating temperature is too high, the base sheet 5 and the mold sheet 7 may be deformed by the heat.

The carbonatation reaction of the calcium hydroxide (slaked lime) undergoes upon coming in contact with the carbonic acid gas. As far as the slurry is preserved in an air-impermeable bag or in a container in a sealed state, however, there is no trouble in maintaining a predetermined ratio of carbonatation and in maintaining the amount of calcium hydroxide in the printing layer 3 in a predetermined range.

Here, as shown in Fig. 1, the mold sheet 7 is provided being closely adhered on the inorganic solidified matter layer 3 of the printing sheet 1, the printing sheet 1 being preserved in the form of the laminate 10 of the printing sheet 1 and the mold sheet 7. At the time of printing, the mold sheet 7 is stripped, and the printing is executed on the surface 3a of the inorganic solidified matter layer 3.

Namely, the surface 3a of the inorganic solidified matter layer 3 has not been completely solidified but is in a half-solidified state. Upon stripping the mold sheet 7, however, the surface portions of the inorganic solidified matter layer 3 that have infiltrated into the transfer surface 7a of the mold sheet 7 are split off or destroyed together with the mold sheet 7. As a result, the transfer surface 7a of the mold sheet 7 is transferred onto the surface 3a of the inorganic solidified matter layer 3.

The mold sheet 7 also works as a protection sheet for protecting the surface of the inorganic solid matter layer 3, as a matter of course. Namely, the inorganic solidified matter layer 3 comprises inorganic particles (e.g., particles of calcium hydroxide or calcium carbonate), and is relatively brittle and is accompanied by such an inconvenience that it is scratched due to the external pressure or the surface is split off. With the mold sheet 7 being provided right after the production of the printing sheet 1 until just before the printing, however, the above inconvenience is effectively prevented.

By utilizing the fact that the transfer surface 7a of the mold sheet 7 is transferred onto the surface 3a of the inorganic solidified matter layer 3, the surface 3a can be used as the printing surface which is very suited for being printed.

As the mold sheet 7, therefore, there is used the nonwoven fabric sheet made from a heat-melt-adhering fiber which is so adjusted by the press-adhesion treatment by using the heating roll that the surface having excellent printability can be transferred.

That is, as observed on an electron microphotograph magnified by 100 times as shown in Fig. 2, the transfer surface 7a of the mold sheet 7 used in the invention is a surface on where continuous flat surfaces and indefinite dents surrounded by the flat surfaces are present being mixed together. Namely, in Fig. 2, regions of a low degree of whiteness or black regions surrounded by a circle are observed as indefinite dents A (i.e., gaps in the fiber), and portions of a high degree of whiteness surrounding the dents A are the flat surfaces.

In the present invention, it is necessary that on the transfer surface 7a, the flat surfaces are present at a ratio of 70 to 90% per a unit area and that the dents A of a size or a long diameter of 10 to 300 $\mu$m are observed in a number of 45 to 250 per 1 $mm^2$ being surrounded by the flat surfaces from the standpoint of rendering the surface 3a of the inorganic solidified matter layer 3 to be the printing surface having excellent printability. Namely, upon laminating the transfer surface 7a of the mold sheet 7 so as to be closely adhered to the surface 3a of the inorganic solidified matter layer 3, the inorganic solidified matter on the surface of the inorganic solidified matter layer 3 infiltrates into the indefinite dents A in the transfer surface 7a. When the mold sheet 7 is stripped, therefore, the portions that have infiltrated into the dents A in the transfer surface 7a are broken. As a result, indefinite protuberances are formed on the surface 3a of the inorganic solidified matter layer 3 being corresponded to the indefinite dents A. That is, with the indefinite dents A of the above-mentioned sizes being formed in a predetermined number in the transfer surface 7a, indefinite protuberances of predetermined sizes having coarse surfaces are formed on the surface 3a of the inorganic solidified matter layer 3 corresponding thereto. As a result, presence of such protuberances enhances the rate of permeation of the printing ink into the inorganic solidified matter layer, effectively prevents the printed images from blurring, and makes it possible to form the printing surface adapted to vividly printing the images. Such indefinite protuberances are also effective in providing the printed images with stereoscopic feeling, feeling of depth or natural appearance.

To form the indefinite dents A of the above size at a predetermined ratio, therefore, it becomes necessary to use, as the mold sheet, the nonwoven fabric sheet that is press-adhesion treated by using the heating roll, the nonwoven fabric sheet being made from the heat-melt adhering fiber. Upon being press-adhered by using the heating roll, the surface of the fiber becomes flat, and the dents A are made present conspicuously.

If, for example, a woven fabric sheet is used instead of the nonwoven fabric sheet, and is melt-adhered, then the transfer surface 7a becomes flat, and the surface 3a of the inorganic solidified matter layer 3 cannot be formed rugged. Even if dents could be made present conspicuously, the fiber has been regularly woven and definite dents have been regularly arranged in the surface spoiling properties specific to the printing sheet 1 that has the inorganic solidified matter layer 3 on the surface of which the printing is to be executed. Moreover, dents cannot be formed to assume a sufficiently large area ratio and, therefore, protuberances are not sufficiently formed on the printing surface making it difficult to effectively suppress the printed images from blurring and to obtain vividly printed images.

Further, if the nonwoven fabric sheet has not been heat-melt-adhered despite it is used, the fiber partly adheres on the surface of the inorganic solidified matter layer 3 when the nonwoven fabric sheet is stripped. Therefore, printability is impaired and, besides, dents A cannot be made present distinctly since the surface of the fiber has not been crushed by heat. Therefore, protuberances transferred onto the surface 3a of the inorganic solidified matter layer 3 lose stability, and the printed images cannot be effectively prevented from blurring, making it difficult to obtain the printing surface on which the images can be printed stably and vividly.

In the invention, further, it is desired that the nonwoven fabric sheet is made from a heat-melt adhering core-sheath fiber (the core material forming a high-melting fiber and the sheath forming a low-melting fiber). For instance, there can be preferably used a nonwoven fabric sheet comprising a commercially available core-sheath fiber using polypropylene as a core material and polyethylene as a sheath. By using the nonwoven fabric comprising the above core-sheath fiber, the low-melting fiber of sheath portions can be melted by the press-adhesion treatment by using the heating roll without, however, causing the core portions to be melted. Namely, the fiber can be melt-adhered and, at the same time, can be flattened yet retaining the shape of the fiber to thereby form the above-mentioned flat portions and indefinite dents A (i.e., gaps in the fiber).

The press-adhesion by the heating roll is carried out by so adjusting the temperature, time and rolling pressure that the dents that are the gaps in the fiber will not be crushed. When the above nonwoven fabric of the core-sheath fiber is used, for example, the press-adhesion treatment is preferably carried out at a temperature not lower than the melting point of the low-melting fiber that is the sheath but lower than the melting point of the high-melting fiber of core. In the case of the nonwoven fabric sheet of the core-sheath fiber using, for example, the polypropylene as the core material and the polyethylene as the sheath, it is desired that the press-adhesion treatment is carried out at a temperature of about 90 to 150°C.

The fiber that constitutes the nonwoven fabric and the weight thereof are so set that the flat portions and the dents A of the predetermined size are formed at the above-mentioned ratios. With the above core-sheath fiber (polypropylene fiber/polyethylene fiber), for example, the filaments have a diameter of, preferably, about 10 to 50 $\mu$m and the weight thereof is set to be about 30 to 120 g/m$^2$. This enables the mold sheet 7 to be held on the surface of the inorganic solidified matter layer 3 being closely adhered thereto with a suitable stripping strength so that the transfer effect and protection effect can be exhibited maintaining stability.

The nonwoven fabric sheet having the transfer surface 7a is press-adhesion treated by using the heating roll so as to satisfy predetermined conditions as described above, is used as the mold sheet 7 being closely adhered on the surface of the inorganic solidified matter layer 3, and is stripped therefrom to render the surface 3a of the inorganic solidified matter layer 3 to be the surface having excellent printability.

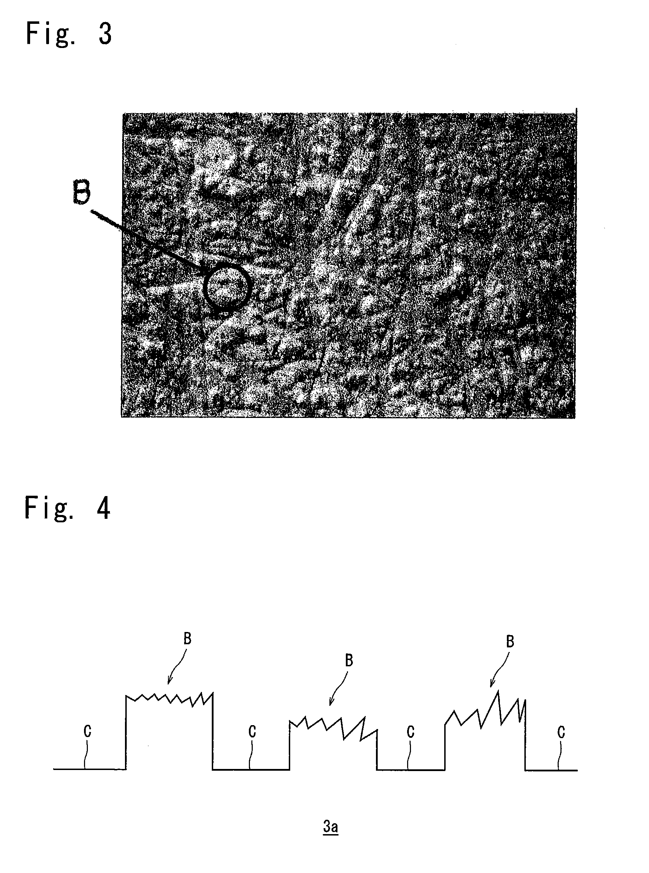

Referring to Figs. 3 and 4, the surface 3a of the inorganic solidified matter layer 3 is a surface in which continuous flat surfaces C and indefinite protuberances B surrounded by the flat surfaces are present being mixed together as observed on an electron microphotograph magnified by 100 times. In Fig. 3, for instance, the region of a high degree of whiteness surrounded by a circle is an indefinite protuberance B which is observed being corresponded to the dent A (gap in the fiber) in the transfer surface 7a of the mold sheet 7. The portions of a low degree of whiteness surrounding the protuberances B are flat surfaces C.

That is, in the printing sheet 1 of the invention, indefinite dents A of the transfer surface 7a of the mold sheet 7 are transferred onto the surface 3a of the inorganic solidified matter layer 3 to form indefinite protuberances B. Here, the protuberances B are formed by stripping the mold sheet 7. As will be understood from Fig. 4, therefore, the protuberances B are assuming considerably rough surfaces. As a result, the printing ink deposited on these portions quickly permeates into the printing layer producing the effect of preventing the fiber from adhering or remaining when the mold sheet 7 is stripped off and also accounting for one of the factors for preventing the printed images from blurring.

In the invention, as observed on the electron microphotograph magnified by 100 times, the indefinite protuberances B are present at a ratio of 10 to 30% per a unit area and are observed having sizes or long diameters of 10 to 300 $\mu$m and in a number of 50 to 300 per 1 mm$^2$. That is, indefinite and fine protuberances B are present in many number in a random fashion maintaining a balance among the flat surfaces C, and the printing ink that has deposited on the flat surfaces C and on the protuberances B permeates into the interior thereof effectively preventing the printed images from blurring and enabling images to be vividly printed.

Further, the printed images do not lose natural appearance specific to the printing surface formed by using the inorganic solidified matter layer. That is, in addition to effectively suppressing the ink from blurring, indefinite protuberances B having indeterminate shapes and sizes of certain degrees are formed in many number in a random fashion among the flat portions C. Therefore, specifically vivid picture quality can be effectively reflected without impairing natural appearance. For instance, despite many protuberances are formed, the images lose natural appearance and give mechanically synthesized impression if the protuberances are of definite shapes such as circular or square shape and are regularly arranged.

Besides, no fiber remains adhered on the surface 3a of the inorganic solidified matter 3, effectively preventing a decrease in the picture quality caused by traces of fiber.

The printing sheet 1 of the invention is placed in the market in the form of a printing laminate 10 having the mold sheet 7 that is laminated as shown in Fig. 1. Usually, however, to maintain the inorganic solidified matter layer 3 formed on the surface of the printing sheet 1 in the half-solidified state, the laminates 10 are preserved in the form of a bundle thereof being packaged in a gas-barrier resin film or the like film. For example, if the inorganic solidified matter layer 3 containing plaster is left in the atmosphere, the plaster precursor undergoes the carbonatation to cause a decrease in the printability (e.g., permeability/fixing of images). To avoid such inconvenience, the carbonatation must be suppressed until the moment of printing. For this purpose, the printing laminates 10 are packed in the resin film or the like film having gas-barrier property.

It is, of course, allowable to wind into a roll the printing laminate 10 that is cut into a suitable size and preserve the roll packed in the gas-barrier film.

There is no specific limitation on the film having gas-barrier property and there can be used various kinds of resin films that have generally been used as packing films. From the standpoint of cost, however, polyolefin films are desired, such as polyethylene film, polypropylene film or polyester film.

To use the printing laminate 10 being sold in a form as described above, the packing film is removed, the mold sheet 7 is stripped off to expose the surface 3a of the inorganic solidified matter layer 3, and the printing is executed on the surface.

As for the printing means, there can be used an ink in which a predetermined pigment or dye is dispersed or dissolved, and the images of predetermined sizes can be continuously printed by gravure printing or by using an ink-jet printer. The ink to be used is, most desirably, a hydrophilic ink obtained by dissolving a water-soluble dye or by dispersing a pigment in water (or in a water/alcohol mixed solvent) by using a surfactant. When the above hydrophilic ink is used, the images can be vividly formed on the inorganic solidified matter layer 3 maintaining stability without blurred. In the invention, an ink based on the pigment is specifically desirably used.

Upon leaving, in the atmosphere (usually for about 2 to 30 days), the inorganic solidified matter layer 3 which contains the plaster and on which the images have been printed as described above, the plaster absorbs carbonic acid gas from the atmosphere, the remaining calcium hydroxide undergoes the carbonatation, and the plaster is solidified. Therefore, the printed images permeate into rugged and porous plaster and are fixed therein to turn out to be like a wall painting producing the feeling of depth as compared to photographic images. Besides, the printed images excel in fastness and their colors do not fade even if they are rubbed. Furthermore, the ink components can be protected from ultraviolet rays and can be stably maintained for extended periods of time.

In the printing sheet 1 of the present invention, indefinite protuberances of predetermined sizes are formed in many number at a constant ratio on the surface of the inorganic solidified matter layer 3 on where the images are to be printed. Specifically, therefore, the printing sheet 1 is very useful effectively preventing the printed images from blurring and enabling images that require vividness, such as portrait and picture of still life to be displayed without impairing pictorial quality rich in stereoscopic feeling and deep filling.

Further, the printing sheet 1 has excellent weather-proof property and is very useful as an ink-jet recording material used, specifically, for the ink-jet printers.

EXAMPLES

Excellent effects of the invention will now be described by way of Experiments.

First, described below are testing methods and materials used in the Experiments.

(1) Method of measuring the quantity of dents or protuberances in the inorganic solidified matter layer or in the nonwoven fabric:

By using an electron microscope (Quanta 200, Genesis 2000 manufactured by EFI Co.), the surface of the inorganic solidified matter layer or the nonwoven fabric was photographed as a digital image being magnified by 100 times. By using an image processing software (Pop Imaging 4.00 manufactured by Digital Being Kids Co.), the obtained digital image data were converted into two values by the discrimination analysis method to clearly distinguish dents and protuberances from each other. By using the image measuring function of the image processing software, further, the total numbers and area ratio of the dents and protuberances were measured per a unit area.

(2) Weather-proof testing:

There were provided printing sheets (A4-size) prepared under the conditions of the Examples and Comparative Examples and commercially available printing papers (A4-size). Each piece of paper was divided into four equal regions and on which four colors, i.e., yellow, cyan, magenta and black, were printed by using an ink-jet printer (PX-5500 manufactured by Epson Co. , using aqueous inks in which pigments were dispersed). The papers were provided each in duplicate. The papers each in one piece were irradiated with ultraviolet rays of an intensity of 500 $\mu$W/cm$^2$ by using a fluorescent lamp for irradiating ultraviolet rays (fluorescent lamp, Model FL30SBL-360 manufactured by Mitsubishi Electric Co.), and the rest of the papers each in the other piece were preserved in a dark place.

The papers irradiated with the ultraviolet rays for a predetermined period of time and the papers preserved in the dark place were taken out. By using a spectral color difference meter (Handy-type easy spectral color difference meter, Model NF333 manufactured by Nihon Denshoku Co.), these papers were found for their color differences ($\Delta$E1 to $\Delta$E4) for the four colors of yellow, cyan, magenta and black in the L* , a* and b* coloring systems in the portions irradiated with ultraviolet rays and in the non-irradiated portions in compliance with the JIS Z 8730. Further, an average value $\Delta$Eav was found in compliance with the following formula and was used as an index of weather-proof property.

$$\Delta Eav = (\Delta E1 + \Delta E2 + \Delta E3 + \Delta E4)/4$$

The value increases with an increase in the change in color.

$\Delta$E1: Color difference between the
ultraviolet-irradiated portion and the non-irradiated portion in the yellow region.
$\Delta$E2: Color difference between the
ultraviolet-irradiated portion and the non-irradiated portion in the cyan region.
$\Delta$E3: Color difference between the
ultraviolet-irradiated portion and the non-irradiated portion in the magenta region.
$\Delta$E4: Color difference between the
ultraviolet-irradiated portion and the non-irradiated portion in the black region.

(3) Abrasion resistance testing:

Abrasion test when wet was conducted in compliance with the JIS-A 6921, and the degree of abrasion resistance (class) was measured in the evaluation of five steps.
Abrasion resistance: Evaluation in five steps of class 1 to class 5; class 5 is the highest degree of abrasion resistance.

(4) Confirming the blurring in the printed images:

By using the ink-jet printer (PX-5500 manufactured by Epson Co.), a black straight line of a width of 0.5 mm was printed on the surfaces of the printing sheets prepared in Examples and in Comparative Examples. The printed straight lines were observed by using a magnifier to make sure the occurrence of blurring with the eye.
The materials used in Examples and Comparative Examples were as described below.

Base sheets:

Pulp paper: Ink-jet paper "FK Slat R-IJ" (trade name) manufactured by Fuji Kyowa Seishi Co. (thickness, 0.17 mm; weight, 160 g/m$^2$)
Glass fiber-mixed paper: "MPS-01" (trade name) manufactured by Hokuetsu Seishi Co. (thickness, 0.35 mm; weight, 85 g/m$^2$)

Calcium hydroxide:

Slaked lime: "Highly Pure Slaked Lime CH" (trade name) manufactured by Ube Materials Co.

Inorganic powder:

Calcium carbonate: "White 7" (trade name) manufactured by Yakusen Sekkai Co.

Aqueous emulsion of acrylic resin:

Polytron: "Polytron A 1480" (trade name) manufactured by Asahi Kasei Kogyo Co. (acrylic copolymerized latex; solid component, 40% by weight)

Liquid-absorbing inorganic powder:

Fine alumina powder: Average particle size ($D_{50}$), 0.05 $\mu$m; oil-absorbing amount, 180 ml/100 g

Nonwoven fabric sheets:

Nonwoven fabric $\alpha$: Core (polypropylene)/sheath (polyethylenne) fiber nonwoven fabric manufactured by Shinwa Co. (fiber diameter, 0.02 mm; thickness, 0.14 mm; weight, 60 g/m$^2$)
Nonwoven fabric $\beta$: Core (polypropylene)/sheath (polyethylenne) fiber nonwoven fabric "HOP-30H" (trade name) manufactured by Hirose Seishi Co. (fiber diameter, 0.02 mm; thickness, 0.09 mm; weight, 30 g/m$^2$)
Nonwoven fabric y: Polyester fiber nonwoven fabric "ELTAS FLAT" (trade name) manufactured by Asahi Kasei Sen-i Co. (fiber diameter, 0.02 mm; thickness, 0.14 mm; weight, 35 g/m$^2$)

(Preparation Examples 1 to 4)

The nonwovenn fabric $\alpha$ and the nonwoven fabric $\beta$ were treated with a hot calender to obtain mold sheets A to D shown in Table 1. The whole numbers of dents in the mold sheets per a unit area and the area ratios were measured according to the above-mentioned measuring methods. The results were as shown in Table 1.

[Table 1]

| Mold sheet | Nonwoven fabric sheet used | Heating temp. (°C) | Thickness (mm) | Whole number of dents 2 per mm$^2$ | Area ratio of dents (%) |
|---|---|---|---|---|---|
| Mold sheet A | nonwoven fabric $\alpha$ | 125 | 0.105 | 140 | 20 |
| Mold sheet B | nonwoven fabric $\alpha$ | 135 | 0.100 | 127 | 18 |
| Mold sheet C | nonwoven fabric $\beta$ | 125 | 0.080 | 197 | 27 |
| Mold sheet D | nonwoven fabric $\beta$ | 135 | 0.075 | 183 | 23 |

Next, 100 parts by weight of the slaked lime, 60 parts by weight of an aqueous emulsion of acrylic resin, 20 parts by weight of water and 5 parts by weight of a liquid-absorbing inorganic powder (fine alumina powder) were kneaded together to obtain a slurry of slaked lime. A pulp paper (300 x 300 mm) was used as the base sheet, and the above slurry of slaked lime was applied on the surface thereof by using a bar coater. Immediately thereafter, the mold sheets A to D shown in Table 1 were press-adhered onto the surface of the slurry and were dried in a drier heated at 50°C for 30 minutes. The mold sheets closely adhered on the surfaces of the laminates were stripped off to find that no fiber was adhering on the surfaces. Next, the whole numbers of the protuberances on the surfaces of the inorganic solidified matter layers per a unit area and the area ratios were measured according to the above-mentioned methods. The results were as shown in Table 2.

[Table 2]

| | Mold sheet | *1 | *2 | *3 | *4 |
|---|---|---|---|---|---|
| Prep. Ex. 1 | A | 0.12 | 158 | 19 | no |
| Prep. Ex. 2 | B | 0.11 | 144 | 17 | no |
| Prep. Ex. 3 | C | 0.12 | 215 | 25 | no |
| Prep. Ex. 4 | D | 0.12 | 201 | 19 | no |

*1: Thickness of inorganic solid layer (mm)
*2: Whole number of protuberances per mm$^2$
*3: Area ratio of protuberances (%)
*4: Presence of residual fiber

(Comparative Preparation Examples 1 and 2)

Laminates having the inorganic solidified matter layer (printing layer) were obtained by using the slurry of the same composition but using the nonwoven fabric $\alpha$ (Comparative Preparation Example 1) and the nonwoven fabric $\beta$ (Comparative Preparation Example 2) instead of using the mold sheets used in the above Preparation Examples. Nonwoven fabrics $\alpha$ and $\beta$ closely adhered onto the surfaces of the inorganic solidified matter layers were stripped from the laminates. It was confirmed that the fibers remained on the surfaces of the inorganic solidified matter layers.

Next, the whole numbers of the protuberances on the surfaces of the printing sheets formed by stripping the nonwoven fabrics $\alpha$ and $\beta$ thereform and the area ratios thereof were measured according to the above-mentioned methods. The results were as shown in Table 3.

[Table 3]

| | Mold sheet | *1 | *2 | *3 | *4 |
|---|---|---|---|---|---|
| Comp. Prep. Ex. 1 | $\alpha$ | 0.12 | 422 | 56 | yes |
| Comp. Prep. Ex. 2 | $\beta$ | 0.11 | 501 | 42 | yes |

*1: Thickness of inorganic solid layer (mm)
*2: Whole number of protuberances per mm$^2$
*3: Area ratio of protuberances (%)
*4: Presence of residual fiber

(Examples 1 to 4 and Comparative Examples 1 and 2)

The printing sheets obtained in Preparation Examples 1 to 4 and in Comparative Preparation Examples 1 and 2 were tested to make sure the occurrence of blurring. In the printing sheets of Comparative Preparation Examples 1 and 2, the ink pigments deposited on the fiber remaining on the surfaces of the inorganic solidified matter layers and developed blurring locally.

Next, the printing sheets were printed in four colors of yellow, cyan, magenta and black, and were left to stand at room temperature for 30 days for being carbonized. The printing sheets were, thereafter, subjected to the weather-proof testing and abrasion resistance testing to measure their average color difference ($\Delta$Eav) and degree (class) of abrasion resistance. The results were as shown in Table 4.

[Table 4]

| Example/Comp. Example | Occurrence of blurring | Deg. of abrasion resistance (class) | Average color difference ($\Delta$Eav) |
|---|---|---|---|
| Example 1 | no | 4 | 1.4 |
| Example 2 | no | 4 | 1.3 |
| Example 3 | no | 4 | 1.3 |
| Example 4 | no | 4 | 1.3 |
| Comp. Ex. 1 | yes | 2 | 1.6 |

(continued)

| Example/Comp. Example | Occurrence of blurring | Deg. of abrasion resistance (class) | Average color difference (ΔEav) |
|---|---|---|---|
| Comp. Ex. 2 | yes | 2 | 1.8 |

(Preparation Examples 5 and 6)

90 Parts by weight of the slaked lime, 55 parts by weight of an aqueous emulsion of acrylic resin, 25 parts by weight of water and 10 parts by weight of inorganic powder (calcium carbonate) were kneaded together to obtain a slurry of slaked lime. Next, a glass fiber-mixed paper (500 x 500 mm) was used as the base sheet, and the above slurry of slaked lime was applied on the surface thereof by using a bar coater. Immediately thereafter, the mold sheets A and B shown in Table 1 obtained in Preparation Examples 1 and 2 were press-adhered onto the surface of the slurry and were dried in a drier heated at 70°C for 10 minutes. The mold sheets closely adhered on the surfaces of the laminates were stripped off to find that no fiber was adhering on the surfaces. Next, the whole numbers of the protuberances on the surfaces of the inorganic solidified matter layers per a unit area and the area ratios were measured according to the above-mentioned methods. Further, the contents of the slaked lime (calcium hydroxide) in the inorganic solidified matter layers were measured relying on the differential calorimetry. The results were as shown in Table 5.

(Comparative Preparation Examples 3 and 4)

Printing sheets having the inorganic solidified matter layer (printing layer) were obtained by using the slurry of the same composition but using the calcium carbonate instead of using the slaked lime used in the above Preparation Examples. Next, the whole numbers of the protuberances on the surfaces of the inorganic solidified matter layers and the area ratios thereof were measured according to the above-mentioned methods. The results were as shown in Table 5.

[Table 5]

| | Mold sheet | *1 | *2 | *3 | *4 | *5 |
|---|---|---|---|---|---|---|
| Prep. Ex. 5 | A | 0.14 | 166 | 20 | no | 66 |
| Prep. Ex. 6 | B | 0.14 | 151 | 16 | no | 59 |
| Comp. Prep. Ex. 3 | A | 0.13 | 152 | 18 | no | 0 |
| Comp. Prep. Ex. 4 | B | 0.13 | 138 | 14 | no | 0 |

*1: Thickness of inorganic solid layer (mm)
*2: Whole number of protuberances per $mm^2$
*3: Area ratio of protuberances (%)
*4: Presence of residual fiber
*5: Slaked lime in inorganic solid layer (wt%)

(Examples 5 and 6, Comparative Examples 3 and 4)

The printing sheets obtained in Preparation Examples 5 and 6 were printed in four colors of yellow, cyan, magenta and black, and were left to stand in room for 40 days for being carbonized. Further, the printing sheets obtained in Comparative Preparation Examples 3 and 4, too, were similarly printed in four colors of yellow, cyan, magenta and black without, however, conducting the carbonization. The printing sheets were subjected to the weather-proof testing and abrasion resistance testing to measure their average color difference (ΔEav) and degree (class) of abrasion resistance. The results were as shown in Table 6.

[Table 6]

| Example/Comp. Example | Period of carbonatation (days) | Deg. of abrasion resistance (class) | Average color difference (ΔEav) |
|---|---|---|---|
| Example 5 | 40 | 5 | 1.2 |
| Example 6 | 40 | 5 | 1.2 |
| Comp. Ex. 3 | - | 1 | 5.2 |
| Comp. Ex. 4 | - | 1 | 5.7 |

(Comparative Example 5)

A laminate having the inorganic solidified matter layer (printing layer) was obtained by using the slurry of the same composition but using the nonwoven fabric γ instead of the nonwoven fabric α that was used in Comparative Preparation Example 1. It was attempted to strip the nonwoven fabric γ from the surface of the inorganic solidified matter layer of the laminate that was obtained. However, the inorganic solidified matter layer was broken since the nonwoven fabric γ had been firmly adhered on the inorganic solidified matter layer, and no printing sheet could be obtained.

(Example 7)

The protection sheet was stripped from the printing laminate obtained in the same manner as in Preparation Example 5, and the obtained printing sheet was put into a polyethylene bag of a thickness of 100 $\mu$m which was then sealed by heat-melt adhesion. After three months have passed, the bag was opened to find that the ratio of the calcium hydroxide in the printing layer was 60% by weight. The printing sheet was tested for its weather-proof property and was measured for its abrasion resistance. As a result of weather-proof testing, the color difference was 1.9 on the average after 40 days, and the abrasion resistance was class 5.

(Comparative Example 6)

A mold sheet E having the following specifications was obtained by changing the conditions for treating the nonwoven fabric α by the hot calender and, further, a printing sheet having the following specifications was obtained in the same manner as in the Preparation Example 1 by using the mold sheet E.

Mold sheet E:

Nonwoven fabric: α
Thickness: 0.89 mm
Whole number of dents: 27/1 mm$^2$
Area ratio of dents: 6%
(Area ratio of flat portions): 94%

Printing sheet:

Thickness of the inorganic solidified matter layer: 0.12 mm
Whole number of protuberances: 33/1 mm$^2$
Area ratio of protuberances: 5%

The above printing sheet was tested to make sure the occurrence of blurring. Though no fiber was recognized to be adhering on the printing surface, blurring occurred locally.

(Comparative Example 7)

A mold sheet F having the following specifications was obtained by changing the conditions for treating the nonwoven fabric α by the hot calender and, further, a printing sheet having the following specifications was obtained in the same manner as in the Preparation Example 1 by using the mold sheet F.

Mold sheet F:

Nonwoven fabric: α
Thickness: 0.13 mm
Whole number of dents: 380/1 mm$^2$
Area ratio of dents: 41%

(Area ratio of flat portions): 59%

Printing sheet:

Thickness of the inorganic solidified matter layer: 0.13 mm
Whole number of protuberances: 460/1 mm$^2$
Area ratio of protuberances: 62%

The above printing sheet had much fiber adhered on the surface thereof. When the testing was conducted to make sure the occurrence of blurring, the printed images had been blurred to a conspicuous degree.

Description of Reference Numerals:

1: printing sheet
3: inorganic solidified matter layer
5: base sheet
7: mold sheet
10: printing laminate

**Claims**

1. A printing sheet comprising a base sheet and an inorganic solidified matter layer laminated on the surface of said base sheet, the surface of said inorganic solidified matter layer serving as the printing surface, wherein,
In an electron microphotograph magnified by 100 times, said printing surface is a surface on where continuous flat surfaces and indefinite protuberances surrounded by said flat surfaces are present being mixed together, said protuberances being present at a ratio of 10 to 30% per a unit area and being observed having sizes or long diameters of 10 to 300 $\mu$m and in a number of 50 to 300 per 1 mm$^2$.

2. The printing sheet according to claim 1, wherein said inorganic solidified matter layer is a layer containing a plaster in a half-solidified state.

3. The printing sheet according to claim 1, wherein said printing surface is formed by closely adhering a mold sheet having a transfer surface onto the surface of said inorganic solidified matter layer, and stripping said mold sheet therefrom.

4. A mold sheet having a transfer surface, wherein said transfer surface is closely adhered onto the surface of an inorganic solidified matter layer and is stripped therefrom so that said transfer surface is transferred onto the surface of said inorganic solidified matter layer to form the printing surface, and wherein,
In an electron microphotograph magnified by 100 times, said transfer surface includes continuous flat surfaces and indefinite dents surrounded by said flat surfaces that are present being mixed together, said flat surfaces being present at a ratio of 70 to 90% per a unit area, and said dents being observed having sizes or long diameters of 10 to 300 $\mu$m and in a number of 45 to 250 per 1 mm$^2$.

5. The mold sheet according to claim 4, the mold sheet being made from a nonwoven fabric sheet of a core-sheath fiber with polypropylene or polyester as a core material and polyethylene as a sheath material.

6. The mold sheet according to claim 5, wherein said nonwoven fabric sheet has been press-adhesion treated by using a heating roll.

7. A printing laminate comprising the printing sheet of claim 1 and the mold sheet of claim 4 which is so provided that the transfer surface thereof is closely adhered on the inorganic solidified matter layer of said printing sheet.

Fig. 1

Fig. 2

Fig. 3

Fig. 4

3a

## INTERNATIONAL SEARCH REPORT

| | International application No. |
|---|---|
| | PCT/JP2012/064092 |

**A. CLASSIFICATION OF SUBJECT MATTER**

*B41M5/00*(2006.01)i, *B32B9/00*(2006.01)i, *B32B13/04*(2006.01)i, *B41M5/50*
(2006.01)i, *B41M5/52*(2006.01)i, *D04H1/544*(2012.01)i, *D04H1/55*(2012.01)i

According to International Patent Classification (IPC) or to both national classification and IPC

**B. FIELDS SEARCHED**

Minimum documentation searched (classification system followed by classification symbols)
B41M5/00, B32B9/00, B32B13/04, B41M5/50, B41M5/52, D04H1/544, D04H1/55

Documentation searched other than minimum documentation to the extent that such documents are included in the fields searched
Jitsuyo Shinan Koho          1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X <br> A | WO 2008/013294 A1  (Tokuyama Corp.), <br> 31 January 2008 (31.01.2008), <br> claims; examples <br> & US 2009/0233015 A1     & EP 2045090 A1 <br> & DE 602007009537 D      & KR 10-2009-0037863 A | 1-4,7 <br> 5,6 |

☐ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search <br> 22 August, 2012 (22.08.12) | Date of mailing of the international search report <br> 04 September, 2012 (04.09.12) |
|---|---|
| Name and mailing address of the ISA/ <br> Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008013294 A